# EUROPÄISCHE PATENTSCHRIFT

(11) **EP 2 070 781 B1**
(45) Veröffentlichungstag und Bekanntmachung des Hinweises auf die Patenterteilung: **23.02.2011**
(21) Anmeldenummer: 08170725.9
(22) Anmeldetag: 04.12.2008
(51) Int. Cl.: B60R 25/02

(54) **Kompakte Verriegelungsvorrichtung mit Sicherungselement**
Compact seal device with safety element
Dispositif de verrouillage compact doté d'un élément de sécurité

(30) Priorität: 10.12.2007 DE 102007059710
(43) Veröffentlichungstag der Anmeldung: 17.06.2009
(73) Patentinhaber: Huf Hülsbeck & Fürst GmbH & Co. KG, 42551 Velbert (DE)
(72) Erfinder: Trischberger, Werner, 85229 Markt Indersdorf (DE)
(74) Vertreter: Vogel, Andreas

(56) Entgegenhaltungen:
- DE-A1-102005 035 439
- DE-A1-102005 050 920
- DE-B3- 10 247 802

## Beschreibung

Die vorliegende Erfindung betrifft eine Verriegelungsvorrichtung zum Verriegeln und/oder Entriegeln eines funktionswesentlichen Bauteils, insbesondere einer Lenksäule oder eines Gangschalthebels oder dergleichen, eines Fahrzeuges gemäß des Oberbegriffs von Anspruch 1. Derartige Verriegelungsvorrichtungen dienen zur Sicherung des Fahrzeuges gegen Diebstahl, in dem sie das funktionswesentliche Bauteil im gesicherten Zustand mittels eines beweglichen Sperrglieds form- und/oder kraftschlüssig verriegeln. Hierdurch findet eine Sicherung des Fahrzeuges gegen Diebstahl und/oder unberechtigtes Benutzen statt. Das Sperrglied selbst wird dabei von einem Antrieb, insbesondere einem Elektromotor, und einem nachgeschalteten Getriebe betätigt.

Aus dem Stand der Technik ist die Druckschrift EP 1 176 065 B1 bekannt, bei der eine Verriegelungsvorrichtung gezeigt ist, in der das Sperrglied über einen Antrieb mit einem nachgeschalteten Getriebe betätigbar ist. Dabei kommt zusätzlich ein Sicherungselement zum Einsatz, welches das Sperrglied in der Entriegelungsposition sichert, um auf jeden Fall eine unbeabsichtigte Verriegelung eines funktionswesentlichen Bauteils, welches z. B. die Lenksäule darstellt, zu verhindern. Sowohl das Sperrglied als auch das Sicherungselement werden von demselben Antrieb betätigt. Allerdings ist das Getriebe äußerst komplex aufgebaut, um eine Entkoppelung zwischen dem Sperrglied und dem Sicherungselement bei der Betätigung zu bewirken. Hierdurch sollen Fehlfunktionen der Verriegelungsvorrichtung auf jeden Fall vermieden werden. Zu diesem Zweck kommt das komplexe, mehrteilige Getriebe mit dem Entkopplungsmechanismus zum Einsatz, welches einen entsprechenden Bauraum benötigt. Folglich muss ein Gehäuse für diese Verriegelungsvorrichtung entsprechend groß ausgestaltet sein, damit sämtliche Bauteile darin untergebracht werden können.

Ebenfalls ist aus der Druckschrift DE 199 64 173 C2 eine weitere Verriegelungsvorrichtung bekannt, bei der auch das Sperrglied über ein Sicherungselement in der Entriegelungsposition gesichert ist. Somit soll auf jeden Fall verhindert werden, dass in dieser Entriegelungsposition, in der sich das Fahrzeug in Fahrbereitschaft befindet, das Sperrglied unbeabsichtigt zu einer Verriegelung des funktionswesentlichen Bauteils, insbesondere in Form einer Lenksäule, führt. Zu diesem Zweck weist diese Verriegelungsvorrichtung zwei getrennte Antriebe auf, nämlich ein Antrieb für das Sperrglied und einen weiteren Antrieb für das Sicherungselement. Die beiden Antriebe können getrennt voneinander angesteuert werden, so dass eine Fehlfunktion des Antriebes des Sperrgliedes nicht automatisch zu einer Fehlfunktion führt, da das Sicherungselement das Sperrglied in der Entriegelungsposition weiter arretiert. Auch diese Verriegelungsvorrichtung benötigt einen entsprechenden Platz, da alleine zwei Antriebsmotoren eingesetzt werden.

Eine gattungsbildende Verriegelungsvorrichtung zeigt die DE 10 2005 035 439 A1.

Es ist daher Aufgabe der vorliegenden Erfindung, eine Verriegelungsvorrichtung zum Verriegeln und/oder Entriegeln eines funktionswesentlichen Bauteils eines Fahrzeuges zu schaffen, die besonders kompakt und einfach aufgebaut ist, wobei die Funktionssicherheit entsprechend gewährleistet ist.

Zur Lösung dieser Aufgabe wird eine Vorrichtung mit den technischen Merkmalen des Anspruches 1 vorgeschlagen, insbesondere mit den Merkmalen aus dem kennzeichnenden Teil, denen nachfolgende besondere Bedeutung zukommt.

Bei der erfindungsgemäßen Verriegelungsvorrichtung wird das vorhandene Sperrglied ebenfalls über Sicherungselement in der Entriegelungsposition arretiert. Somit soll auch auf jeden Fall ausgeschlossen werden, dass ein mechanischer Defekt an der Verriegelungsvorrichtung zu einer Blockade des funktionswesentlichen Bauteils mit dem Sperrglied während der Fahrt des Fahrzeuges führt. Um nun eine besonders kompakte Verriegelungsvorrichtung zu erhalten, weist die Vorrichtung nur einen Antrieb auf und ein einfaches Getriebe. Sowohl das Sicherungselement als auch das Sperrglied werden durch ein Antriebsrad des Getriebes angetrieben, wobei zusätzlich an dem Antriebsrad wenigstens ein Steuermittel angeordnet ist, womit das Sicherungselement betätigbar ist. Das Getriebe selbst kann z. B. aus einem einstufigen Schneckenradgetriebe bestehen, wobei das Antriebsritzel, die so genannte Schnecke, auf einer Antriebswelle des Antriebes angeordnet ist und das Schneckenrad, welches das Antriebsrad darstellt, antreibt. Folglich weist die erfindungsgemäße Verriegelungsvorrichtung wenige Bauteile auf, die platzsparend mechanisch zusammenwirken und so eine kompakte Verriegelungsvorrichtung ermöglichen.

Um die Funktionssicherheit der Verriegelungsvorrichtung zu erhöhen, kann optional die Stellung des Sicherungselementes von einer Steuerung der Verriegelungsvorrichtung erfasst werden, wozu ein entsprechendes Sensorelemente angeordnet sein kann. Gleichzeitig kann auch die Position des Sperrgliedes über ein weiteres Sensorelement erfasst werden und die entsprechenden Informationen an die Steuerung geleitet werden. Durch eine logische Verknüpfung, z. B. durch eine Sicherheitsabfrage, kann somit durch die Steuerung ausgeschlossen werden, dass eine elektrische Fehlfunktion zu einem unbeabsichtigten Verriegeln der Verriegelungsvorrichtung führt.

Weitere vorteilhafte Ausgestaltungen und Ausführungsbeispiele der Erfindung ergeben sich aus den Unteransprüchen sowie der nachfolgenden Beschreibung.

Bei einer besonderen Ausgestaltung der Verriegelungsvorrichtung wirkt das Antriebsrad des Getriebes direkt mit dem Sperrglied und/oder dem Sicherungselement mechanisch zusammen. Folglich kommen keine weiteren Bauteile zwischen dem Sperrglied und dem Antriebsrad sowie zwischen dem Sicherungselement und dem Antriebsrad vor. Durch die reduzierte Anzahl der Bauteile kann gleichzeitig die Funktionssicherheit erhöht werden, da auf ein kompliziertes Zusammenspiel von vielen Bauteilen verzichtet wird. Selbstverständlich ist es auch denkbar, das Sperrglied und/oder das Sicherungselement indirekt mit dem Antriebsrad zu verbinden, wodurch jedoch mehrere Bauteile benötigt werden und ein Teil der Vorteile der vorliegenden Erfindung kompensiert werden. Nachfolgend wird gezeigt, wie nun das direkte Zusammenwirken zwischen Antriebsrad, Sperrglied und Sicherungselement technisch realisiert wird.

Bei einem weiteren Ausführungsbeispiel der Erfindung weist das Antriebsrad ein Führungsmittel, insbesondere in Form einer spiralförmigen Führungsnut, auf, womit das Sperrglied betätigbar bzw. längsverschiebbar ist. Ferner ist am Sperrglied ein komplementäres Gegenführungsmittel angeordnet, insbesondere in Form eines Führungsnockens, welches formschlüssig mit dem Führungsmittel im Antriebsrad zusammenwirkt. Das Antriebsrad selbst ist drehbar um eine Achse im Gehäuse oder an einem Trägerelement gelagert. Das Führungsmittel ist vorzugsweise an einer Vorder- oder einer Rückseite des Antriebsrades vorgesehen, wobei durch die entsprechende Kontur des Führungsmittels bzw. der spiralförmigen Führungsnut die Längsbewegung des Sperrgliedes vorgebbar ist.

Sowohl das Sperrglied als auch das Sicherungselement können längsverschieblich im Gehäuse gehalten sein, wobei insbesondere die jeweilige Bewegungsrichtung im Wesentlichen orthogonal zueinander angeordnet ist. Durch die orthogonal zueinander vorgesehene Bewegungsrichtung des Sperrgliedes und des Sicherungselementes lässt sich der kompakte Aufbau der Verriegelungsvorrichtung leicht realisieren. Um die Vormontage der Verriegelungsvorrichtung stark zu vereinfachen, können der Antrieb, das Getriebe, das Sperrglied und/oder das Sicherungselement an dem erwähnten Trägerelement im Gehäuse der Verriegelungsvorrichtung angeordnet sein. Das Trägerelement weist den Vorteil auf, dass es von sämtlichen Seiten zugänglich ist, wodurch eine leichte Bestückung mit den jeweiligen Bauteilen möglich ist. Anschließend kann das vormontierte Trägerelement mit den bereits montierten Bauteilen in dem Gehäuse integriert werden. Hierzu kann das Trägerelement z. B. in das Gehäuse hineingeschoben werden oder auf eine Gehäusehälfte aufgesetzt werden.

Zweckmäßigerweise ist das Sperrglied zumindest zweiteilig aufgebaut, wobei ein Basisteil und ein Wirkteil vorgesehen sind, und das Wirkteil federnd im Basisteil gelagert ist. Das Basisteil selber dient als angesteuertes Bauteil, wodurch das Sperrglied längs im Gehäuse hin und her verschoben wird. Das Wirkteil wirkt mit dem funktionswesentlichen Bauteil formschlüssig (eventuell auch kraftschlüssig) zusammen. Um nun eine Zerstörung oder mechanische Defekte an der Verriegelungsvorrichtung zu vermeiden, auch wenn das Sperrglied nicht vollständig aus der Öffnung des Gehäuses ausfahren kann, weil beispielsweise das funktionswesentliche Bauteil mit einem Nocken davor verharrt, ist das Wirkteil nachgiebig im Basisteil gelagert. Somit kann das Sperrglied auch von dem Antrieb in die Verriegelungsposition überführt werden, selbst wenn das funktionswesentliche Bauteil ungünstig vor der Öffnung des Gehäuses verharrt. Wird jedoch anschließend z. B. die Lenksäule oder der Gangschalthebel (also das funktionswesentliche Bauteil) betätigt, so dass nunmehr das Sperrglied vollständig ausfahren kann, so drückt die Feder im Sperrglied das Wirkteil gegen das Basisteil aus der Öffnung des Gehäuses in den vorgesehenen Freiraum beim funktionswesentlichen Bauteil. Damit findet die gewünschte Wirkverbindung zwischen dem funktionswesentlichen Bauteil und dem Sperrglied, insbesondere dem federnd gelagerten Wirkteil statt. Erst wenn das Sperrglied mittels des Basisteils aus der Verriegelungsposition in die Entriegelungsposition überführt wird, wird die Wirkverbindung zwischen dem Sperrglied und dem funktionswesentlichen Bauteil wieder aufgehoben.

Bei der zuvor genannten Ausführungsform der Verriegelungsvorrichtung ist es ferner zweckmäßig, dass das komplementäre Gegenführungsmittel am Basisteil des Sperrgliedes angeordnet ist, welches formschlüssig mit dem Führungsmittel des Antriebes zusammenwirkt. Somit kann einerseits ein zwangsweiser Antrieb des Sperrgliedes erreicht werden, der andererseits aber nicht zu einer Zerstörung der Verriegelungsvorrichtung im ungünstigen Fall führt.

Bei einer weiteren Ausgestaltung der Erfindung ist das Getriebe selbsthemmend aufgebaut, so dass ein Einwirken auf einer Abtriebsseite keinen Einfluss auf eine Antriebsseite des Getriebes hat. Damit kann verhindert werden, dass Manipulationen, insbesondere die auf das Sperrglied wirken, zu einem Positionswechsel des Sperrgliedes führen. Durch das selbsthemmende Getriebe ist es nicht möglich, dass das Sperrglied von außen längs verschoben wird. Zwar kann ein Druck in Richtung der Gehäuseöffnung auf das Sperrglied in der Verriegelungsposition ausgeübt werden, der jedoch nicht zu einer Längsbewegung, insbesondere zu einem Einfahren des Sperrgliedes in das Gehäuse, führt. Der Druck auf das Sperrglied kann zwar eine Drehung des Antriebsrades verursachen, wobei sich das Antriebsrad nur drehen kann, wenn sich das Antriebsritzel des Getriebes ebenfalls mitdreht. Bei dem selbsthemmenden Getriebe ist dieses jedoch nicht der Fall. Als selbsthemmendes Getriebe kann ein Schneckenradgetriebe eingesetzt werden.

Ebenfalls ist denkbar, dass bei einer weiteren Ausführung der Erfindung, das Sicherungselement durch ein Federelement selbst verschieblich belastet ist, wobei das Sicherungselement zumindest zwei Stellungen einnehmen kann, nämlich eine Arretierungsstellung, in der das Sperrglied in der Entriegelungsposition durch das Sicherungselement arretiert ist, und eine Entsicherungsstellung, in der das Sicherungselement nicht mit dem Sperrglied mechanisch zusammenwirkt. Durch das vorhandene Federelement wird das Sicherungselement selbstständig in die Arretierungsstellung bewegt, in der es das Sperrglied in der Entriegelungsposition sichert. Auf diese Art und Weise kann sichergestellt werden, dass das Sicherungselement immer das Sperrglied arretiert, sobald sich dieses in der Entriegelungsposition befindet. Zusätzlich ist es denkbar, dass das Federelement formschlüssig angeordnet ist, wobei es einerseits mit dem Sicherungselement und anderseits mit dem Gehäuse oder dem Trägerelement zusammenwirkt. So kann beispielsweise im Sicherungselement und/oder in dem Gehäuse bzw. dem Trägerelement eine entsprechende Bohrung vorgesehen sein, um das Federelement teilweise formschlüssig aufzunehmen. Auch kann ein entsprechender Vorsprung oder Zapfen am Sicherungselement oder am Gehäuse bzw. dem Trägerelement vorgesehen sein, der von dem Federelement formschlüssig umfasst wird.

Erfindungsgemäβ ist am Sicherungselement ein Führungselement vorgesehen sein, durch das das Sicherungselement verschieblich im Gehäuse gelagert ist, wobei insbesondere das Führungselement eine U-förmige Schiene umfassen kann. Entsprechend ist im Gehäuse oder am Trägerelement ein komplementäres Gegenführungselement für das Führungselement des Sicherungselementes vorgesehen , welches insbesondere T-förmig ausgestaltet ist und von dem U-förmigen Führungselement umfasst wird. Somit bildet das Führungselement mit dem komplementären Gegenführungselement eine geschlossene Längsführung für das Sicherungselement. Durch die zuvor beschriebene Führung des Sicherungselementes wird der Freiheitsgrad des Sicherungselements auf eine Längsbewegung beschränkt.

Ferner ist es denkbar, dass das Sicherungselement ein Rastmittel, insbesondere in Form eines federnd gelagerten Vorsprunges, aufweist, womit das Sicherungselement formschlüssig im Gehäuse oder am Trägerelement gehalten ist. Ein entsprechendes komplementäres Gegenrastmittel für das Rastmittel des Sicherungselementes kann im Gehäuse oder am Trägerelement vorgesehen sein, welches insbesondere als Vorsprung oder Absatz ausgestaltet ist. Damit ist eine einfache Montages des Sicherungselementes im Gehäuse oder am Trägerelement möglich, da das Rastmittel nach der Montage im Gehäuse oder am Trägerelement formschlüssig mit dem Gegenrastmittel zusammenwirkt, wodurch es längsbeweglich aber unverlierbar gehalten ist.

Eine zusätzliche Ausgestaltung des Sicherungselementes weist ein Gegensteuermittel auf, welches mit dem Steuermittel am Antriebsrad zusammenwirkt. Somit kann das Antriebsrad mit seinem Steuermittel direkt auf das Gegensteuermittel des Sicherungselementes einwirken, wodurch sich der kompakte Aufbau der Verriegelungsvorrichtung ergibt. Ferner ist es denkbar, dass das Sicherungselement ein Haltemittel aufweist, wodurch das Sperrglied, insbesondere formschlüssig in der Entriegelungsposition arretiert ist. Dieses Haltemittel wirkt somit direkt auf das Sperrglied, welches zu diesem Zweck eine Aufnahme oder einen Absatz aufweist, der als Gegenhaltemittel verwendet wird. Das Gegenhaltemittel ist zweckmäßigerweise am Basisteil und/oder Wirkteil des zweiteiligen Sperrgliedes angeordnet. In der Entriegelungsposition fährt das Haltemittel des Sicherungselementes hinter das Gegenhaltemittel und hält dieses (das Sperrglied mit dem Gegenhaltemittel) somit formschlüssig fest. Da das Haltemittel des Sicherungselementes nahe der Gehäuseöffnung vorgesehen ist, kann selbst bei einem Materialbruch (von den Bauteilen) keine Verriegelung des funktionswesentlichen Bauteils geschehen, weil die Öffnung durch das arretierte Sperrglied verschlossen ist.

Nachfolgend werden zwei grundsätzliche Varianten für die Ausgestaltung des Steuermittels am Antriebsrad dargestellt.

Bei der ersten Variante ist das Steuermittel des Antriebsrads als eine bogenförmige Steuerkante ausgestaltet, die axial mit dem Sicherungselement zusammenwirkt. Unter axial wird dabei verstanden, dass sich das Steuermittel in Richtung der Drehachse des Antriebsrades erstreckt. Hierbei ist es denkbar, dass die bogenförmige Steuerkante insbesondere auf einer gegenüberliegenden Seite des Führungsmittels vom Antriebsrad angeordnet ist. Somit kann z. B. das Führungsmittel auf der Vorderseite des Antriebsrades angeordnet sein und das Steuermittel auf der Rückseite des Antriebsrades. Die bogenförmige Steuerkante weist zweckmäßigerweise Anlaufschrägen auf, um eine kontinuierliche Ansteuerung des Sicherungselementes von der Entsicherungsstellung in die Arretierungsstellung und umgekehrt zu ermöglichen. Aus diesem Grund ist es zweckmäßig, dass die bogenförmige Steuerkante an beiden Enden mit entsprechenden Anlaufschrägen versehen ist. Nur zur Verdeutlichung soll erwähnt werden, dass das Steuermittel und das Führungsmittel des Antriebsrades auch auf ein und derselben Seite, z. B. der Vorderseite, angeordnet sein kann.

Die zweite grundlegende Variante des Steuermittels ist als scheibenförmige Steuerkante ausgestaltet und wirkt radial mit dem Sicherungselement zusammen. Folglich ist die scheibenförmige Steuerkante orthogonal zu der zuvor erwähnten bogenförmigen Steuerkante angeordnet und drückt somit das Sicherungselement radial von der Drehachse des Antriebsrades weg, wobei sich das Sicherungselement auch in axialer. Richtung bewegen kann. Auch bei dieser scheibenförmigen Steuerkante ist es zweckmäßig, entsprechende Anlaufschrägen an den Übergängen vorzusehen, damit eine kontinuierliche Bewegung des Sicherungselementes von der Entsicherungsstellung in die Arretierungsstellung und umgekehrt stattfinden kann. Vorteilhafterweise ist die scheibenförmige Steuerkante auf einer gegenüberliegenden Seite des Führungsmittels vom Antriebsrad angeordnet. Folglich können das Führungsmittel auf der Vorderseite und das Steuermittel auf der Rückseite des Antriebsrades angeordnet sein.

Bei einer weiteren Ausgestaltung der Erfindung kann das Antriebsrad wenigstens zweitteilig aufgebaut sein, mit einem Grundkörper, in dem das Führungsmittel angeordnet ist, und einem Verzahnungskörper, der zusätzlich zur Verzahnung auch das Steuermittel aufweist, wobei der Grundkörper drehfest mit dem Verzahnungskörper verbunden ist. Der Grundkörper könnte beispielsweise aus Aluminiumdruckguss bestehen, der mit dem kunststoffartigen Verzahnungskörper umspritzt wird. Die Erfindung umfasst aber auch ein einteiliges oder mehrteiliges Antriebsrad.

Weitere Maßnahmen und Vorteile sowie technische Merkmale der Erfindung ergeben sich aus den Ansprüchen, der nachfolgenden Beschreibung und den Zeichnungen. In den nachstehenden Figuren ist die erfindungsgemäße Verriegelungsvorrichtung in mehreren Ausführungsbeispielen detailliert dargestellt. Es zeigen:
- Fig. 1: eine Draufsicht auf die erfindungswesentlichen Bauteile der Verriegelungsvorrichtung, welche vormontiert auf einem Trägerelement angeordnet sind,
- Fig. 2: eine dreidimensionale Darstellung des Sicherungselementes aus Fig. 1 angeordnet an dem Trägerelement in einer Arretierungsstellung IIb,
- Fig. 3a: ein vergleichbarer Schnitt I-I durch Fig. 1, wobei das Sicherungselement in der Entsicherungsstellung IIa angeordnet ist,
- Fig. 3b: Schnitt I-I durch Fig. 1, wobei das Sicherungselement in einer Arretierungs- stellung IIb das Sperrglied in der Verriegelungsposition Ia sichert,
- Fig. 4a: Rückansicht auf eine erste Variante eines Antriebsrades mit einer bogenförmigen Steuerkante, die axial aus einer Rückseite des Antriebsrades herausragt,
- Fig. 4b: Schnitt II-II durch Fig. 4a,
- Fig. 5a: Rückansicht auf eine zweite Variante des Antriebsrades mit einer scheibenförmigen Steuerkante, die an einer Rückseite des Antriebsrades angeordnet ist,
- Fig. 5b: Schnitt III-III durch Fig. 5a und
- Fig. 6: schematische Darstellung der Verriegelungsvorrichtung in Draufsicht, wobei das Trägerelement mit den funktionswesentlichen Bauteilen außerhalb des Gehäuses dargestellt ist.

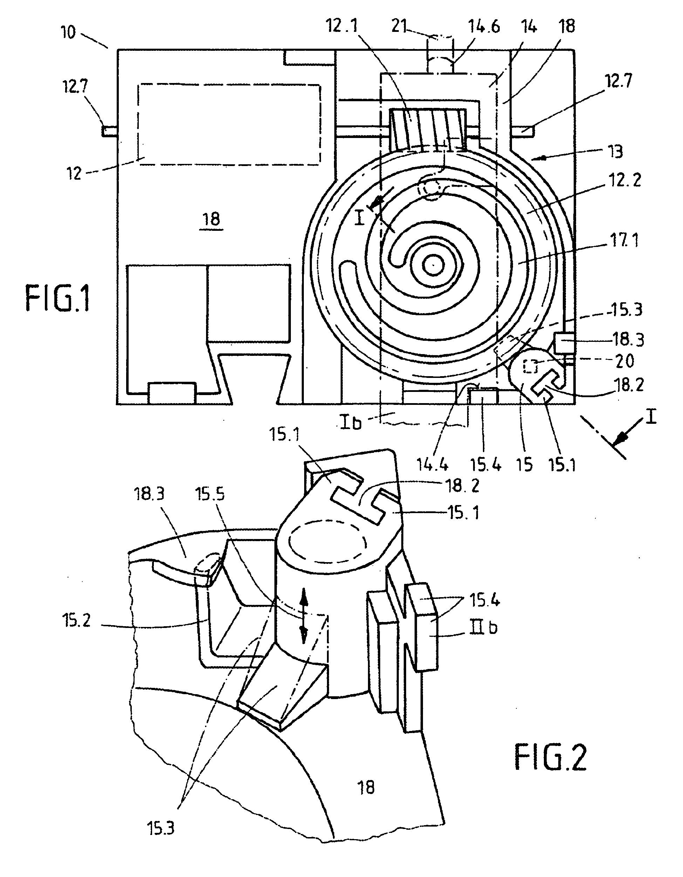

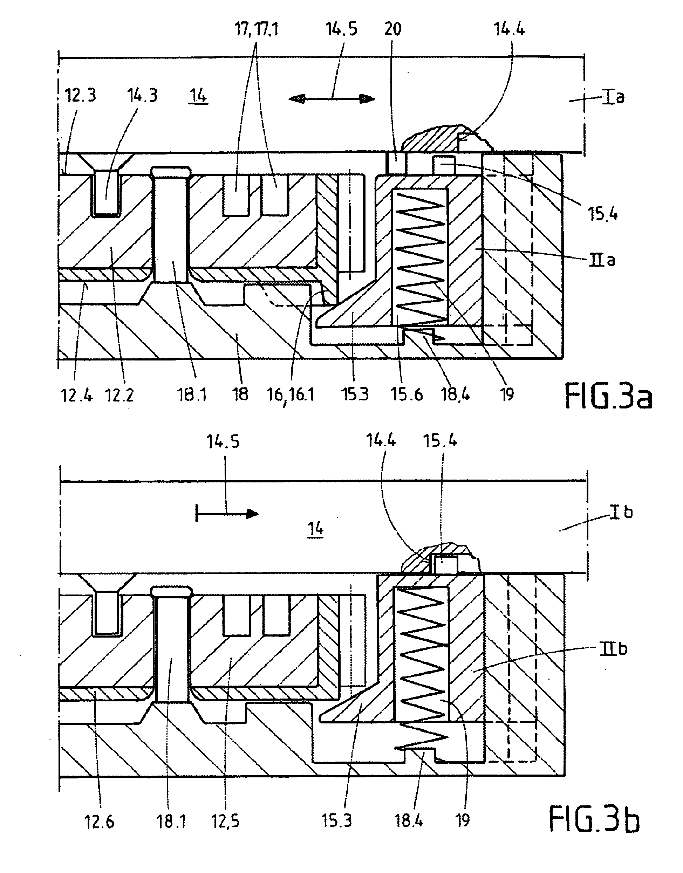

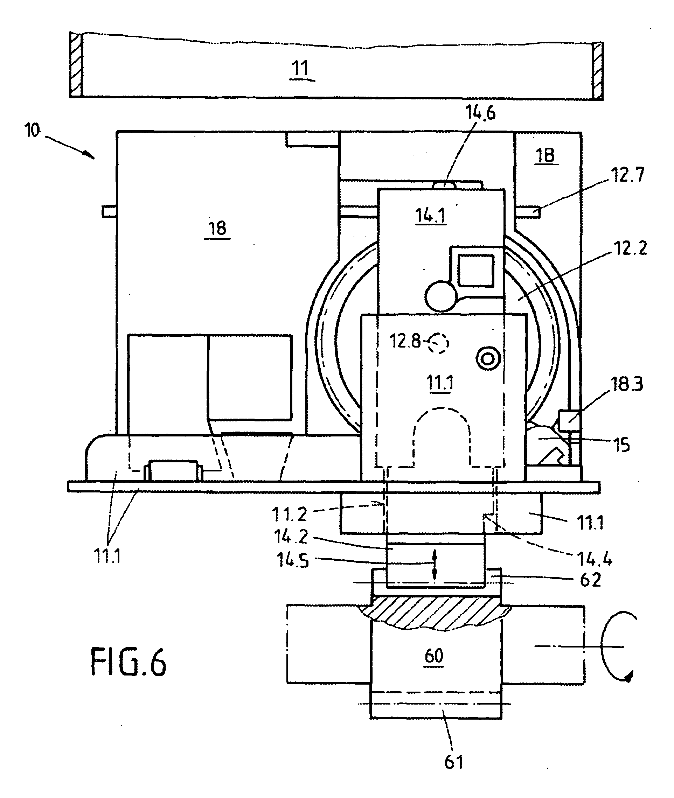

Die Fig. 1 zeigt eine Draufsicht auf eine teilweise Verriegelungsvorrichtung 10 mit den erfindungswesentlichen Bauteilen. Dabei sind die wesentlichen Bauteile an einem Trägerelement 18 angeordnet, welches nach der Vormontage mit den weiteren Bauteilen in ein Gehäuse 11 der Verriegelungsvorrichtung 10 eingeschoben werden kann (s. Fig. 6). Somit ist die Fertigung und Montage der vorliegenden Verriegelungsvorrichtung 10 besonders einfach, da das Trägerelement 18 von allen Seiten her zugänglich ist. An dem Trägerelement 18 ist der Antrieb 12, welcher aus einem Elektromotor bestehen kann, angeordnet. Der Antrieb 12 weist ferner eine Antriebswelle 12.7 auf, an der drehfest ein Antriebsritzel 12.1 vorgesehen ist, womit die Drehbewegung des Antriebes 12 auf ein weiteres Antriebsrad 12.2 übertragbar ist. Das Antriebsritzel 12.1 bildet mit dem Antriebsrad 12.2 ein Getriebe 13, welches vorliegend als Schneckenradgetriebe 13 ausgestaltet ist. Somit bildet das Antriebsritzel 12.1 die Antriebsschnecke 12.1 die mit dem orthogonal angeordneten Antriebsrad 12.2 in Form des Schneckenrades 12.2 zusammenwirkt. Durch den Antrieb 12 wird ein Sperrglied 14 längsverschieblich (s. Pfeil 14.5) im Gehäuse 11 der Verriegelungsvorrichtung 10 bewegt. Zu diesem Zweck ist in oder an dem Antriebsrad 12.2 ein Führungsmittel 17, in Form einer spiralförmigen Nut 17.1 vorgesehen, wodurch das Sperrglied 14 betätigt wird. Des Weiteren weist das Sperrglied 14 ein Gegenführungsmittel 14.3 auf, welches als ein Führungsnocken ausgestaltet ist und von oben in das Führungsmittel 17, insbesondere die spiralförmige Führungsnut 17.1, formschlüssig hineinragt. Die Wirkungsweise des Führungsmittels 17 mit dem Gegenführungsmittel 14.3 wird aus den Figuren 3a und 3b deutlicher. In der Fig.1 befindet sich das Sperrglied 14 weitest gehend in einer Entriegelungsposition Ib.

Vorteilhafterweise wird ein selbsthemmendes Getriebe 13 eingesetzt, um das Sperrglied 14 zu betätigen, so dass eine Manipulation der Verriegelungsvorrichtung 10 von außen nicht möglich ist. Wird versucht, dass Sperrglied 14 aus der Verriegelungsposition Ia in die Entriegelungsposition IB in das Gehäuse 11 hinein zu drücken, so blockiert das selbsthemmende Getriebe 13 die Längsverschiebung des Sperrgliedes 14.

Das Antriebsrad 12.2 ist selbst drehbar um seine Drehachse 12.8 am Trägerteil 18, insbesondere an der Achse 18.1, angeordnet. Durch das eingeleitete Drehmoment vom Antrieb 12 dreht sich das Antriebsrad 12.2, wodurch auch die spiralförmige Nut 17.1 gedreht wird. Da das Sperrglied 14 längsverschieblich im Gehäuse 11, insbesondere an eine Abdeckplatte 11.1 gelagert ist, führt die Drehung der spiralförmigen Nut 17.1 zu einer Längsverschiebung des Sperrgliedes 14, wobei der Führungsnocken 14.3 formschlüssig mit der spiralförmigen Nut 17.1 zusammenwirkt und von dieser für eine Hin- und Herbewegung bzw. eine Längsverschiebung des Sperrgliedes 14 sorgt.

Je nach Position des Sperrgliedes 14 ragt dieses aus einer Öffnung 11.2 aus dem Gehäuse 11 heraus, wo es mit dem funktionswesentlichen Bauteil 60, welches eine Lenkradsäule oder ein Gangsschalthebel oder dergleichen darstellen kann, formschlüssig zusammenwirkt. Diese Position wird auch die Verriegelungsposition Ia des Sperrgliedes 14 genannt (s. Fig. 6). In der Verriegelungsposition Ia ist das Fahrzeug gesichert und ist somit nicht betriebsbereit. Wird jedoch das Sperrglied 14 von dem Antriebsrad 12.2 in seine Entriegelungsposition Ib verschoben, so wirkt das Sperrglied 14 nicht mehr mit dem funktionswesentlichen Bauteil 60 zusammen (s. Fig. 1). In dieser Entriegelungsposition Ib ist das Sperrglied 14 durch ein Sicherungselement 15 arretiert. Zu diesem Zweck bildet das Sicherungselement 15 in einer Arretierungsstellung IIb einen Formschluss mit dem Sperrglied 14.

In der Fig. 1 ist dieser Formschluss angedeutet, in dem das Sicherungselement 15 mittels des angeordneten Haltemittels 15.4 einen Formschluss mit einem Absatz 14.4 am Sperrglied 14 bildet. Das Sperrglied 14 ist in der Fig. 1 nur strichpunktiert angedeutet, damit die darunterliegenden Bauteile, wie das Getriebe 13 und das Sicherungselement 15 sichtbar in Erscheinung treten. Im vorliegenden Fall ist das Sicherungselement 15 konkret am Trägerelement 18 längsverschieblich gelagert. Zu diesem Zweck weist das Sicherungselement 15 ein Führungselement 15.1 auf, welches U-förmig ausgestaltet ist, und mit einem Gegenführungselement 18.2 am Trägerelement 18 längsverschieblich zusammenwirkt: Das Gegenführungselement 18.2 ist selbst T-förmig ausgestaltet und wird von dem U-förmigen Führungselement 15.1 umgriffen. Somit ist das Sicherungselement 15 in axialer Richtung parallel zur Drehachse 12.8 des Antriebsrades 12.2 längsverschieblich am Trägerelement 18 gehalten (s. Pfeil 15.5 in Fig. 2).

In der Fig. 2 ist das erfindungsgemäße Sicherungselement 15 näher dargestellt. Zu diesem Zweck ist eine dreidimensionale Darstellung von dem Sicherungselement 15 mit dem zugeordneten Trägerelement 18 abgebildet, wobei sich das Sicherungselement 15 in der Arretierungsstellung IIb befindet. Das Sicherungselement 15 ist über das Führungselement 15.1 längsverschieblich an dem Trägerelement 18 oder dem Gehäuse 11 anordbar. Zu diesem Zweck weist das Trägerelement 18 oder das Gehäuse 11 ein komplementär ausgestaltetes Gegenführungselement 18.2 auf. Im vorliegenden Fall ist das Führungselement 15.1 als eine U-förmige Schiene ausgestaltet, die mit einer T-förmigen Schiene 18.2 des Trägerelementes 18 zusammenwirkt. Selbstverständlich sind auch andere Ausgestaltungen für das Führungselement 15.1 und Gegenführungselement 18.2 denkbar. Durch das Zusammenwirken des Führungselementes 15.1 mit dem Gegenführungselement 18.2 ist das Sicherungselement 15 nur in Richtung des Pfeils 15.5 verschieblich gelagert. Das Sicherungselement 15 wird von einem Federelement 19 in die Arretierungsstellung IIb gedrückt. Das Federelement 19 ist in den Figuren 3a und b sichtbar. In der Fig. 2 ist es innerhalb einer Bohrung 15.6 des Sicherungselementes 15 angeordnet und damit nicht sichtbar. Ferner weist das Sicherungselement 15 ein Haltemittel 15.4 auf, womit das Sperrglied 14 in der Entriegelungsposition Ib formschlüssig arretiert wird. Das Haltemittel 15.4 ist als ein seitlicher Vorsprung ausgestaltet, der zusätzlich an dem Gehäuse 11, insbesondere der Abdeckplatte 11.1 verschiebbar geführt wird. Somit ist ein Abscheren des Haltemittels 15.4 kaum möglich, auch wenn hohe Kräfte gegen das Sperrglied 14 drücken, um es in die Verriegelungsposition Ia zu bewegen.

Des Weiteren weist das Sicherungselement 15 ein Gegensteuermittel 15.3 für das Steuermittel 16 am Antriebsrad 12.2 auf. Mit diesem Gegensteuermittel 15.3, welches z. B. als ein schräger Vorsprung am Sicherungselement 15 ausgestaltet sein kann, wird das Sicherungselement 15 niedergedrückt, um es von der Arretierungsstellung IIb in die Entsicherungsstellung IIa zu bewegen. Das Gegensteuermittel 15.3 kann in seiner Ausgestaltung an das Steuermittel 16 angepasst werden. Zu diesem Zweck ist in der Fig. 2 eine strichpunktierte Variante des Gegensteuermittels 15.3 dargestellt, die mit einer scheibenförmigen Steuerkante 16.2 des Antriebsrades 12.2 zusammenwirken kann. Die vorhandene Variante des Gegensteuermittels 15.3 wirkt z. B. mit einem Steuermittel 16 in Form einer bogenförmigen Steuerkante 16.1 zusammen. Diese bogenförmige Steuerkante 16.1 drückt das Sicherungselement 15 durch das Gegensteuermittel 15.3 bedarfsweise nieder (in Richtung des Pfeils 15.5).

Zusätzlich ist an dem Sicherungselement 15 ein Rastmittel 15.2 vorgesehen, womit das Sicherungselement 15 sicher am Trägerelement 18 gehalten ist und nicht durch das vorhandene Federelement 19 verloren gehen kann. Zu diesem Zweck wirkt das Rastmittel 15.2, welches als ein federnder Vorsprung 15.2 ausgestaltet ist, mit einem Gegenrastmittel 18.3 am Trägerelement 18 oder alternative am Gehäuse 11 zusammen. Das Gegenrastmittel 18.3 kann selbst als ein Absatz oder ein Vorsprung am Trägerelement 18 ausgestaltet sein. Folglich ist die Montage des federbelasteten Sicherungselementes 15 denkbar einfach, in dem es nur mit dem Federelement 19 auf das T-förmige Gegenführungselement 18.2 geschoben wird und dann anschließend niedergedrückt wird. Dabei verrastet das Rastmittel 15.2 selbstständig mit dem Gegenrastmittel 18.3, wodurch das Sicherungselement 15 unverlierbar am Trägerelement 18 angeordnet ist. Anschließend kann das Antriebsrad 12.2 auf dem Trägerelement 18 aufgesteckt werden, wobei nur noch der Antrieb 12 und das Sperrglied 14 auf dem Trägerteil 18 montiert werden muss. Das Sperrglied 14 wird über die Abdeckplatte 11.1 an dem Trägerelement 18 angeordnet. Anschließend kann z. B. die Steuerungselektronik von oben oder unten an dem Trägerelement 18 befestigt werden, so dass sämtliche inneren Bauteile der Verriegelungsvorrichtung 10 an dem Trägerelement 18 angeordnet sind. Das vormontierte Trägerelement 18 ist dann nur noch innerhalb des Gehäuses 11 anzuordnen, wobei hierdurch die Fertigung bzw. Montage der Verriegelungsvorrichtung 10 abgeschlossen wird.

Um die Funktionssicherheit der vorliegenden Verriegelungsvorrichtung 10 zu erhöhen, können zusätzlich Sensorelemente vorgesehen sein. Dabei kann z. B. ein Sensorelement 20 oberhalb des Sicherungselementes 15 angeordnet sein, welches die jeweilige Stellung IIa oder IIb des Sicherungselementes 15 erfasst und die Informationen an eine Steuerung weiter liefert. In der Fig. 1 ist ein entsprechendes Sensorelement 20 oberhalb des Sicherungselementes 15 angedeutet. Ebenfalls kann auch die jeweilige Position Ia oder Ib des Sperrgliedes 14 durch ein weiteres Sensorelementes 21 beispielsweise am hinteren Ende des Sperrgliedes 14 erfasst werden. Auch diese Informationen können von dem Sensorelement 21 an die Steuerung der Verriegelungsvorrichtung 10 übertragen werden. Die Steuerung kann dann über einen Sicherheitsablauf die korrekte Funktionsweise der Verriegelungsvorrichtung 10 überwachen. Zusätzlich kann auch die jeweilige Stellung des Antriebsrades 12.2 des Antriebsritzel 12.1 erfasst werden. Hierzu können Drehgeber an den jeweiligen Rädern des Getriebes 13 vorgesehen sein. Auch ist es denkbar, dass als Antrieb 12 ein Schrittmotor zum Einsatz kommt, der genaue Informationen über die jeweilige Stellung des Antriebritzels 12.1 oder des Antriebsrades 12.2 liefert.

In den Figuren 3a und 3b ist die Wirkungsweise des Sicherungselementes 15 mit dem Antriebsrad 12.2 bzw. dem Steuermittel 16 am Antriebsrad 12.2 dargestellt. Hierbei ist die erste grundlegende Variante des Antriebsrades 12.2 mit einer bogenförmigen Steuerkante 16.1 gezeigt. Diese bogenförmige Steuerkante 16.1 drückt über das Gegensteuermittel 15.3 das Sicherungselement 15 nieder, so dass sich das Sicherungselement 15 in der Entsicherungsstellung IIb befindet (s. Fig. 3a). In dieser Stellung befindet sich gleichzeitig das Sperrglied 14 in der Verriegelungsposition Ia oder in einer Zwischenposition. Wird nun das Sperrglied 14 durch eine Drehung des Antriebsrades 12.2 in das Gehäuse 11 hineingezogen, so erreicht das Sperrglied 14 seine Entriegelungsposition Ib. Durch die Drehung des Antriebsrades 12.2 ändert sich gleichzeitig die Lage der bogenförmigen Steuerkante 16.1 (am Antriebsrad 12.2). In der Entriegelungsposition Ib wirkt die bogenförmige Steuerkante 16.1 nicht mehr mit dem Gegensteuermittel 15.3 zusammen, so dass das Sicherungselement 15 durch das Federelement 19 in die Arretierungsstellung IIb gedrückt wird. Diese Arretierungsstellung IIb ist in der Fig. 3b dargestellt. Hierbei greift das Sicherungselement 15 mit seinem Haltemittel 15.4 hinter einen Absatz 14.4 des Sperrgliedes 14 ein. Damit ist das Sperrglied 14 in der Entriegelungsposition Ib formschlüssig durch das Sicherungselement 15 arretiert. Anstelle des Absatzes 14.4 kann auch eine entsprechende Aufnahme in Form eines Durchbruchs oder einer Bohrung in dem Sperrglied 14 vorgesehen sein, die mit dem Haltemittel 15.4 formschlüssig zusammenwirkt.

Wie in den Figuren 3a und 3b zu erkennen ist, wird das Sperrglied 14 mittels des Gegenführungsmittels 14.3 über das Führungsmittel 17 in Richtung des Pfeils 14.5 im

Gehäuse 11 hin- und herverschoben. Das Antriebsrad 12.2 ist drehbar um die Achse 18.1 am Trägerelement 18 gelagert. Die Achse 18.1 kann an ihrem oberen Ende eine Verdickung aufweisen, womit das Antriebsrad 12.2 form- und/oder kraftschlüssig auf der Achse 18.1 gehalten ist. Zusätzlich ist in dem Trägerelement 18 eine kreisförmige Ausnehmung im Bereich der bogenförmigen Steuerkante 16.1 vorgesehen, damit diese Steuerkante 16.1 kontaktlos im Trägerelement 18 bewegbar ist. Das verwendete Federelement 19 ist innerhalb der Bohrung 15.6 im Sicherungselement 15 formschlüssig angeordnet. Zur weiteren formschlüssigen Anordnung des Federelementes 19 ist ein herausragender Zapfen 18.4 am Trägerelement 18 angeordnet, der in das Federelement 19 hineinragt. Ebenfalls kann auch eine Bohrung am Trägerelement 18 vorgesehen sein, um das Federelement 19 dort sicher festzuhalten.

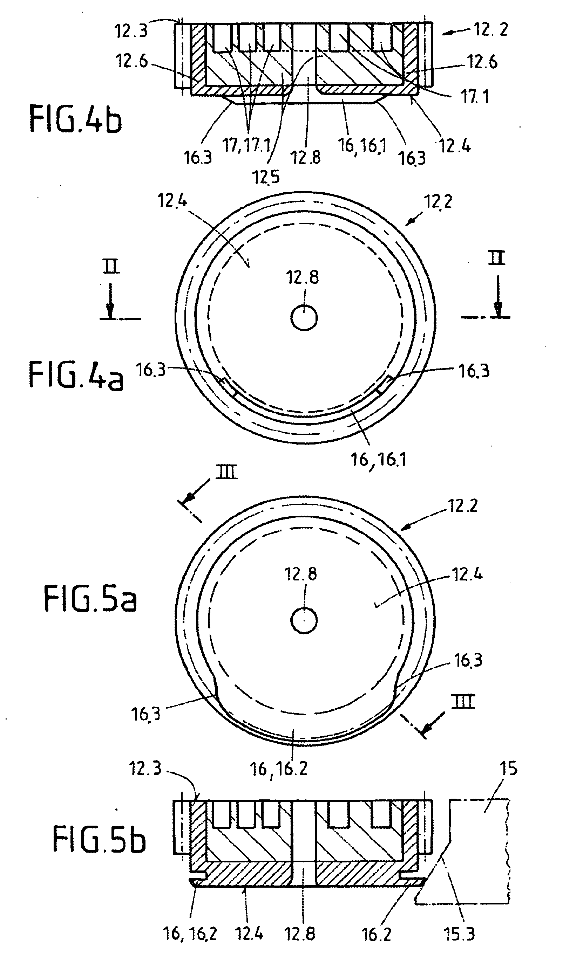

In den Figuren 4a und 4b ist die erste grundlegende Variante des Antriebsrades 12.2 mit dem Steuermittel 16 dargestellt, wobei hier das Steuermittel 16 aus einer bogenförmigen Steuerkante 16.1 besteht, die axial aus einer Seite, insbesondere einer Rückseite 12.4, des Antriebsrades 12.2 heraussteht. Die bogenförmige Steuerkante 16.1 ist besonders deutlich in der Fig. 4b zu erkennen. Damit das Sicherungselement 15 leichtgängig zu betätigen ist, weist die bogenförmige Steuerkante 16.1 links- und rechtsseitig entsprechende Anlaufschrägen 16.3 auf, die mit dem Gegensteuermittel 15.3 zusammenwirken. Aus der Fig. 4a ist ersichtlich, dass die bogenförmige Steuerkante 16.1 ungefähr viertelkreisförmig ausgestaltet ist. Die bogenförmige Steuerkante 16.1 ist entsprechend zur spiralförmigen Nut 17.1 geometrisch angeordnet, wodurch erreicht wird, dass das Sicherungselement 15 seine Arretierstellung IIb dann erhält, wenn das Sperrglied 14 in der Entriegelungsposition Ib ist. Das Führungsmittel 17 ist bei dem Antriebsrad 12.2 aus den Figuren 4a und 4b in bzw. an einer Vorderseite 12.3 angeordnet. Im Gegensatz dazu ist das Steuermittel 16 auf der Rückseite 12.4 vorgesehen. Das Antriebsrad 12.2 ist ferner zweiteilig aufgebaut, wobei es einen Grundkörper 12.5 umfasst, in dem das Führungsmittel 17 angeordnet ist. Ferner umfasst das Antriebsrad 12.2 ein Verzahnungskörper 12.6, der zusätzlich zur Außenverzahnung auch das Steuermittel 16 aufweist. Der Grundkörper 12.5 wird drehfest von dem Verzahnungskörper 12.6 umgeben.

In den Figuren 5a und 5b ist die zweite grundsätzliche Variante des Antriebsrades 12.2 mit dem Steuermittel 16 als scheibenförmige Steuerkante 16.2 dargestellt. Auch dieses Antriebsrad 12.2 kann zweiteilig aufgebaut sein, wobei der Grundkörper 12.5 identisch zum Grundkörper aus den Figuren 4a und b ausgestaltet sein kann. Der wesentliche Unterschied besteht in der Ausgestaltung des Steuermittels 16, welches eine scheibenförmige Steuerkante 16.2 aufweist, die radial auf das Sicherungselement 15 wirkt. Zu diesem Zweck ragt die scheibenförmige Steuerkante 16.2 an der Rückseite 12.4 des Antriebsrades 12.2 heraus. Auch diese scheibenförmige Steuerkante 16.2 kann über zwei Anlaufschrägen 16.3 verfügen, wodurch die Betätigung des Sicherungselementes 15 deutlich erleichtert wird. Das Sicherungselement 15 wird orthogonal zur Wirkrichtung (radiale Richtung) der scheibenförmige Steuerkante 16.2 durch diese nieder gedrückt. Ebenfalls ist es denkbar, dass das Sicherungselement 15 nach rechts oder links verschiebbar angeordnet ist, und durch die scheibenförmige Steuerkante 16.2 betätigt wird. In diesem Fall ist die Wirkrichtung der scheibenförmige Steuerkante 16.2 parallel zur Bewegungsrichtung des Steuerelementes 15.

In der Fig. 5b ist der Schnitt III-III durch die Fig. 5a dargestellt, wobei zusätzlich das Sperrglied 15 strichpunktiert angedeutet ist. Wie zu erkennen ist, kann die scheibenförmige Steuerkante 16.2 das Sicherungselement 15 anhand des Gegensteuermittels 15.3 nach unten drücken in die Entsicherungsstellung IIa. Die dargestellte Schräge des Gegensteuermittels 15.3 dient nur zur Verdeutlichung und ist nicht auf den konkreten Winkel beschränkt. Durch eine Drehung des Antriebsrades 12.2 verändert sich auch die Lage der scheibenförmigen Steuerkante 16.2, so dass diese nicht immer in Kontakt mit dem Gegensteuermittel 15.3 steht, wodurch das Gegensteuermittel 15.3 mittels des Federelementes 19 in die Arretierungsstellung IIb überführbar ist. Auch diese scheibenförmigen Steuerkante 16.2 ist geometrisch exakt auf das Führungsmittel 17 abgestimmt.

In der Fig. 6 ist das Sperrglied 14 in der Verriegelungsposition Ia dargestellt. Hierbei wirkt es formschlüssig mit dem funktionswesentlichen Bauteil 60 zusammen, wodurch dieses nicht funktionsuntüchtig ist. Im vorliegenden Beispiel ist das funktionswesentliche Bauteil 60 als eine Lenksäule ausgestattet, die über einen entsprechenden Zahnkranz verfügt. Dieser Zahnradkranz weist Nocken 61 auf, zwischen denen entsprechende Ausnehmungen 62 vorgesehen sind. Bei der Verriegelung der Lenksäule 60 ragt das Sperrglied 14 zwischen zwei Nocken 61 in die dazwischen liegende Ausnehmung 62 hinein, wodurch die Lenksäule 60 formschlüssig verriegelt ist. Um nun eine zerstörungsfreie Funktion der Verriegelungsvorrichtung 10 zu ermöglichen, ist das vorliegende Sperrglied 14 zweiteilig aufgebaut. Hierbei besteht es aus einem Basisteil 14.1 und einem Wirkteil 14.2. Das Sperrglied 14 wird über das Gegensteuermittel 15.3 am Basisteil 14.3 angetrieben. Fährt nun das Sperrglied 14 aus der Öffnung 11.2 des Gehäuses 11 heraus, um die Verriegelungsposition Ia einzunehmen, so kann es dabei auf einen Nocken 61 des funktionswesentlichen Bauteils 60 treffen. Damit es in diesem Fall nicht zu einer Zerstörung kommt, ist das Wirkteil 14.2 federnd im Basisteil 14.1 gelagert. Folglich würde das Wirkteil 14.2 durch den Nocken 61, der vor der Öffnung 11.2 steht, eingedrückt, so lange bis das funktionswesentliche Bauteil ein wenig gedreht oder verschoben wird, wodurch das Wirkteil 14.2 in eine Ausnehmung 62 des funktionswesentlichen Bauteil 60 einfahren kann. Das Wirkteil 14.2 wirkt folglich direkt mit einem Nocken 61 des funktionswesentlichen Bauteils 60 zusammen, wo hingegen das Basisteil 14.1 zur Verschiebung des Sperrgliedes 14 dient und nicht aus dem Gehäuse 11 ragt. Wie bereits erwähnt wurde, ist das Sperrglied 14 in der Abdeckplatte 11.1 verschieblich gelagert. Durch diese Abdeckplatte 11.1 wird das Sperrglied 14 an dem Trägerelement 18 gehalten. Die Abdeckplatte 11.1 kann gleichzeitig dazu dienen, auch das Antriebsrad 12.2 an das Trägerelement 18 zu drücken. Die Abdeckplatte 11.1 kann beispielsweise über eine Schwalbenschwanzführung und weitere Längsführungen an dem Trägerelement 18 angeordnet werden. Oberhalb oder unterhalb des Trägerelementes 18 kann optional die Elektronikeinheit mit der Steuerung angeordnet sein. Ferner ist an der Abdeckplatte 11.1 ein Durchbruch vorgesehen, in den das Sicherungselement 15 mit seinem Haltemittel 15.4 hineinragt. Dieser Durchbruch dient gleichzeitig als Führung für das Haltemittel 15.4. Wie in der Fig. 6 ersichtlich ist, ragt das Sperrglied 14 mit seinem Wirkteil 14.2 aus dem Gehäuse 11 hinaus, wobei der Absatz 14.4 am Wirkteil 14.2 nicht in Wirkverbindung mit dem Haltemittel 15.4 des Sicherungselementes 15 steht. Erst beim Einfahren des Sperrgliedes 14 arretiert das Haltemittel 15.4 selbstständig das Sperrgliedes 14 an dem entsprechenden Absatz 14.4.

Zusätzlich kann an dem Sperrglied 14, insbesondere dem Basisteile 14.1 ein Tastelement 14.6 vorgesehen sein, welches in das Basisteil 14.1 eindrückbar ist, wenn das Wirkteil 14.2 maximal aus dem Basisteil 14.1 ragt. Trifft hingegen das Wirkteil 14.2 auf das funktionswesentliche Bauteil 16, so dass das Wirkteil 14.2 in das Basisteil 14.1 einfährt, so ist das Tastelement 14.6 nicht eindrückbar in das Basisteil 14.1. Anhand des Tastelement 14.6 kann somit der Zustand des Wirkteils 14.2 zum Basisteil 14.1 von einem Sensorelement erfasst werden.

Abschließend ist noch zu erwähnen, dass die hier dargestellten Ausführungsbeispiele und die Varianten der erfindungsgemäßen Verriegelungsvorrichtung 10, insbesondere zur formschlüssigen Arretierung des Sperrgliedes 14 durch das Sicherungselement 15, beliebig miteinander kombinierbar sind, sofern sich diese nicht explizit ausschließen. So kann beispielsweise anstelle des dargestellten Schneckenradgetriebes 13 auch ein anderes Getriebe 13 vorgesehen sein. Auch muss das Sperrglied 14 nicht über eine spiralförmige Nut 17.1 längsverschieblich im Gehäuse 11 bewegt werden.

### Bezugszeichenliste

- 10: Verriegelungsvorrichtung
- 11: Gehäuse
- 11.1: Abdeckplatte
- 11.2: Öffnung
- 12: Antrieb
- 12.1: Antriebsritzel
- 12.2: Antriebsrad
- 12.3: Vorderseite von 12.2
- 12.4: Rückseite von 12.2
- 12.5: Grundkörper von 12.2
- 12.6: Verzahnungskörper von 12.2
- 12.7: Antriebswelle
- 12.8: Drehachse von 12.2
- 13: Getriebe
- 14: Sperrglied
- 14.1: Basisteil
- 14.2: Wirkteil
- 14.3: Gegenführungsmittel zu 17, Führungsnocken
- 14.4: Absatz
- 14.5: Bewegungsrichtung von 14
- 14.6: Tastelement
- 15: Sicherungselement
- 15.1: Führungselement, insbesondere als U-förmige Schiene
- 15.2: Rastmittel, insbesondere als federnder Vorsprung
- 15.3: Gegensteuermittel für 16
- 15.4: Haltemittel
- 15.5: Bewegungsrichtung von 15
- 15.6: Bohrung für 19
- 16: Steuermittel an 12
- 16.1: bogenförmige Steuerkante für 15.3
- 16.2: scheibenförmige Steuerkante für 15.3
- 16.3: Anlaufschräge
- 17: Führungsmittel an 12
- 17.1: spiralförmige Nut
- 18: Trägerelement
- 18.1: Achse für 12.2, (s. auch 12.8)
- 18.2: Gegenführungselement für 15.1, insbesondere T-förmig Schiene
- 18.3: Gegenrastmittel für 15.2, insbesondere als Vorsprung oder Absatz
- 18.4: Zapfen für 19
- 19: Federelement
- 20: Sensorelement für 15
- 21: Sensorelement für 14

- 60: funktionswesentliches Bauteil
- 61: Nocken von 60
- 62: Ausnehmung in 60

### Sperrglied 14

- Ia: Zeichen für die Verriegelungsposition
- Ib: Zeichen für die Entriegelungsposition

### Sicherungselement 15

- IIa: Zeichen für die Entsicherungsstellung
- IIb: Zeichen für die Arretierungsstellung

## Patentansprüche

1. Verriegelungsvorrichtung (10) zum Verriegeln und/oder Entriegeln eines funktionswesentlichen Bauteils (60), insbesondere einer Lenksäule oder eines Gangschalthebels oder dergleichen, eines Fahrzeugs mit
einem Gehäuse (11), einem Antrieb (12) und einem dem Antrieb (12) nachgeschalteten Getriebe (13) sowie
einem Sperrglied (14), welches mittels des Getriebes (13) zumindest zwei Positionen einnehmen kann, nämlich
eine Verriegelungsposition (Ia), in der das Sperrglied (14) aus dem Gehäuse (11) durch eine Öffnung (11.2) rausragt und in einer Wirkverbindung mit dem Bauteil (60) steht, und
eine Entriegelungsposition (Ib), in der das Sperrglied (14) in keiner Wirkverbindung mit dem Bauteil (60) steht, und
einem Sicherungselement (15), womit das Sperrglied (14) zumindest in der Entriegelungsposition (Ib), insbesondere formschlüssig, arretierbar ist, und
dass das Getriebe (13) zumindest ein das Sperrglied (14) betätigende Antriebsrad (12.2) aufweist,
dass das Sicherungselement (15) durch das Antriebsrad (12.2) des Getriebes (13) steuerbar ist,
wobei an dem Antriebsrad (12.2) wenigstens ein Steuermittel (16) angeordnet ist, womit das Sicherungselement (15) betätigbar ist,
**dadurch gekennzeichnet,**
**dass** das Sicherungselement (15) ein Führungselement (15.1) aufweist, durch das es verschieblich im Gehäuse (11) gelagert ist,
und **dass** im Gehäuse (11) oder an einem Trägerelement (18) ein komplementäres Gegenführungselement (18.2) für das Führungselement (15.1) des Sicherungselementes (15) vorgesehen ist.

2. Verriegelungsvorrichtung (10) nach Anspruch 1,
**dadurch gekennzeichnet,**
**dass** das Antriebsrad (12.2) des Getriebes (13) direkt mit dem Sperrglied (14) und/oder dem Sicherungselement (15) mechanisch zusammenwirkt.

3. Verriegelungsvorrichtung (10) nach Anspruch 1 oder 2,
**dadurch gekennzeichnet,**
**dass** das Antriebsrad (12.2) ein Führungsmittel (17), insbesondere in Form einer spiralförmigen Führungsnut (17.1), aufweist, womit das Sperrglied (14) betätigbar ist.

4. Verriegelungsvorrichtung (10) nach einem der vorhergehenden Ansprüche,
**dadurch gekennzeichnet,**
**dass** der Antrieb (12), das Getriebe (13), das Sperrglied (14) und/oder das Sicherungselement (15) an dem Trägerelement (18) im Gehäuse (11) der Verriegelungsvorrichtung (10) angeordnet sind.

5. Verriegelungsvorrichtung (10) nach einem der vorhergehenden Ansprüche,
**dadurch gekennzeichnet,**
**dass** das Antriebsrad (12.2) drehbar mittels einer Achse (18.1) im Gehäuse (11) oder am Trägerelement (18) gelagert ist.

6. Verriegelungsvorrichtung (10) nach einem der vorhergehenden Ansprüche,
**dadurch gekennzeichnet,**
**dass** Sperrglied (14) und/oder das Sicherungselement (15) längsverschieblich im Gehäuse (11) gehalten sind, wobei insbesondere die jeweiligen Bewegungsrichtungen (14.5, 15.5) im Wesentlichen orthogonal zueinander angeordnet sind.

7. Verriegelungsvorrichtung (10) nach einem der vorhergehenden Ansprüche,
**dadurch gekennzeichnet,**
**dass** das Sperrglied (14) zumindest zweiteilig aufgebaut ist, wobei ein Basisteil (14.1) und ein Wirkteil (14.2) vorgesehen sind, und das Wirkteil (14.2) federnd im Basisteil (14.1) gelagert ist.

8. Verriegelungsvorrichtung (10) nach Anspruch 7,
**dadurch gekennzeichnet,**
**dass** am Basisteil (14.1) des Sperrglieds (14) ein komplementäres Gegenführungsmittel (14.3) zum Führungsmittel (17) des Antriebsrades (12.2) angeordnet ist, die formschlüssig zusammenwirken.

9. Verriegelungsvorrichtung (10) nach einem der vorhergehenden Ansprüche,
**dadurch gekennzeichnet,**
**dass** das Getriebe (13) selbsthemmend ist, sodass ein Einwirken auf einer Abtriebsseite keinen Einfluss auf eine Antriebsseite des Getriebes (13) hat, wobei insbesondere ein Schneckenradgetriebe (13) vorgesehen ist.

10. Verriegelungsvorrichtung (10) nach einem der vorhergehenden Ansprüche,
**dadurch gekennzeichnet,**
**dass** das Sicherungselement (15) selbst verschieblich durch ein Federelement (19) belastet ist, wobei das Sicherungselement (15) zumindest zwei Stellungen einnehmen kann,
nämlich eine Arretierungsstellung (IIb), in der das Sperrglied (14) in der Entriegelungsposition (Ib) durch das Sicherungselement (15) arretiert ist, und eine Entsicherungsstellung (IIa), in der das Sicherungselement (15) nicht mit dem Sperrglied (14) mechanisch zusammenwirkt, und
wobei insbesondere das Federelement (19) das Sicherungselement (15) in die Arretierungsstellung (IIb) bewegt.

11. Verriegelungsvorrichtung (10) nach Anspruch 10,
**dadurch gekennzeichnet,**
**dass** das Federelement (19) einerseits formschlüssig am bzw. im Sicherungselement (15) gehalten ist und andererseits formschlüssig am bzw. im Gehäuse (11) oder Trägerelement (18).

12. Verriegelungsvorrichtung (10) nach einem der vorhergehenden Ansprüche,
**dadurch gekennzeichnet,**
**dass** das Führungselement (15.1) eine U-förmige Schiene umfasst, und das komplementäre Gegenführungselement (18.2) T-förmig ausgestaltet ist.

13. Verriegelungsvorrichtung (10) nach einem der vorhergehenden Ansprüche,
**dadurch gekennzeichnet,**
**dass** das Sicherungselement (15) ein Rastmittel (15.2), insbesondere in Form eines federnd gelagerten Vorsprunges, aufweist, womit das Sicherungselement (15) formschlüssig im Gehäuse (11) oder am Trägerelement (18) gehalten ist, und dass im Gehäuse (11) oder am Trägerelement (18) ein komplementäres Gegenrastmittel (18.3) für das Rastmittel (15.2) des Sicherungselementes (15) vorgesehen ist, welches insbesondere als Vorsprung oder Absatz ausgestaltet ist.

14. Verriegelungsvorrichtung (10) nach einem der vorhergehenden Ansprüche,
**dadurch gekennzeichnet,**
**dass** das Sicherungselement (15) ein Gegensteuermittel (15.3) aufweist, welches mit dem Steuermittel (16) am Antriebsrad (12.2) zusammenwirkt.

15. Verriegelungsvorrichtung (10) nach einem der vorhergehenden Ansprüche,
**dadurch gekennzeichnet,**
**dass** das Sicherungselement (15) ein Haltemittel (15.4) aufweist, wodurch das Sperrglied (14), insbesondere formschlüssig, in der Entriegelungsposition (Ib) arretiert ist.

16. Verriegelungsvorrichtung (10) nach einem der vorhergehenden Ansprüche,
**dadurch gekennzeichnet,**
**dass** das Steuermittel (16) des Antriebsrads (12.2) als eine bogenförmige Steuerkante (16.1) ausgestaltet ist und axial mit dem Sicherungselement (15) zusammenwirkt, wobei die bogenförmige Steuerkante (16.1) insbesondere auf einer gegenüberliegenden Seite des Führungsmittels (17) vom Antriebsrad (12.2) angeordnet ist.

17. Verriegelungsvorrichtung (10) nach einem der Ansprüche 1 bis 15,
**dadurch gekennzeichnet,**
**dass** das Steuermittel (16) des Antriebsrads (12.2) als eine scheibenförmige Steuerkante (16.2) ausgestaltet ist und radial mit dem Sicherungselement (15) zusammenwirkt, wobei die scheibenförmige Steuerkante (16.2) insbesondere auf einer gegenüberliegenden Seite des Führungsmittels (17) vom Antriebsrad (12.2) angeordnet ist.

18. Verriegelungsvorrichtung (10) nach einem der vorhergehenden Ansprüche,
**dadurch gekennzeichnet,**
**dass** das Antriebsrad (12.2) wenigstens zweitteilig aufgebaut ist, mit einem Grundkörper (12.5), in dem das Führungsmittel (17) angeordnet ist, und einem Verzahnungskörper (12.6), der zusätzlich zur Verzahnung auch das Steuermittel (16) aufweist, wobei der Grundkörper (12.5) drehfest mit dem Verzahnungskörper (12.6) verbunden ist.

## Claims

1. A locking apparatus (10) for locking and/or unlocking a functionally essential component (60), in particular a steering column or a gearshift lever or the like, of a vehicle with a housing (11), a drive (12) and a gearbox (13) arranged downstream of the drive (12) as well as a locking member (14) which can occupy at least two positions by means of the gearbox (13), namely
a locking position (Ia) in which the locking member (14) projects out of the housing (11) through an opening (11.2) and is operatively connected to the component (60), and
an unlocking position (Ib) in which the locking member (14) is not operatively connected to the component (60), and
a securing element (15) by which the locking member (14) is capable of being locked at least in the unlocking position (Ib), in particular in a positively locking manner, and
the gearbox (13) has at least one driving wheel (12.2) which actuates the locking member (14), wherein
the securing element (15) is controllable by the driving wheel (12.2) of the gearbox (13), and
wherein at least one control means (16) by which the securing element (15) is capable of being actuated is arranged on the driving wheel (12.2), **characterized in that**
the securing element (15) has a guide element (15.1) by which it is mounted in a displaceable manner in the housing (11),
and a complementary counter guide element (18.2) for the guide element (15.1) of the securing element (15) is provided in the housing (11) or on a support element (18).

2. A locking apparatus (10) according to claim 1, **characterized in that** the driving wheel (12.2) of the gearbox (13) co-operates directly with the locking member (14) and/or the securing element (15) in a mechanical manner.

3. A locking apparatus (10) according to claim 1 or 2, **characterized in that** the driving wheel (12.2) has a guide means (17), in particular in the form of a spiral guide groove (17.1) by which the locking member (14) is capable of being actuated.

4. A locking apparatus (10) according to any one of the preceding claims, **characterized in that** the drive (12), the gearbox (13), the locking member (14) and/ or the securing element (15) is or are arranged on the support element (18) in the housing (11) of the locking apparatus (10).

5. A locking apparatus (10) according to any one of the preceding claims, **characterized in that** the driving wheel (12.2) is mounted in the housing (11) or on the support element (18) so as to be rotatable by means of an axle (18.1).

6. A locking apparatus (10) according to any one of the preceding claims, **characterized in that** the locking member (14) and/or the securing element (15) is or are held in the housing (11) so as to be longitudinally displaceable, wherein in particular the respective movement directions (14.5, 15.5) are arranged substantially at a right angle to each other.

7. A locking apparatus (10) according to any one of the preceding claims, **characterized in that** the locking member (14) is designed in at least two parts, wherein a base part (14.1) and an active part (14.2) are provided, and the active part (14.2) is mounted in a springing manner in the base part (14.1).

8. A locking apparatus (10) according to claim 7, **characterized in that** a complementary counter guide means (14.3) to the guide means (17) of the driving wheel (12.2) is arranged on the base part (14.1) of the locking member (14), and they co-operate in a positively locking manner.

9. A locking apparatus (10) according to any one of the preceding claims, **characterized in that** the gear mechanism (13) is self-locking, so that action upon a driven side has no influence upon a driving side of the gear mechanism (13), wherein in particular a worm gear mechanism (13) is provided.

10. A locking apparatus (10) according to any one of the preceding claims, **characterized in that** the securing element (15) is itself stressed in a displaceable manner by a spring element (19), wherein the securing element (15) can occupy at least two positions, namely a locking position (IIb) in which the locking member (14) is locked in the unlocking position (Ib) by the securing element (15), and a release position (IIa) in which the securing element (15) does not co-operate with the locking member (14), and wherein the spring element (19) in particular moves the securing element (15) into the locking position (IIb).

11. A locking apparatus (10) according to claim 10, **characterized in that** the spring element (19) is held at one end on or in the securing element (15) in a positively locking manner and at the other end on or in the housing (11) or the support element (18) in a positively locking manner.

12. A locking apparatus (10) according to any one of the preceding claims, **characterized in that** the guide element (15.1) comprises a U-shaped rail, and the complementary counter guide element (18.2) is made T-shaped.

13. A locking apparatus (10) according to any one of the preceding claims, **characterized in that** the securing element (15) has an engagement means (15.2), in particular in the form of a projection mounted in a springing manner, by which the securing element (15) is held in the housing (11) or on the support element (18) in a positively locking manner, and a complementary counter engagement means (18.3) for the engagement means (15.2) of the securing element (15), which is provided in particular in the form of a projection or offset, is provided in the housing (11) or on the support element (18).

14. A locking apparatus (10) according to any one of the preceding claims, **characterized in that** the securing element (15) has a counter control means (15.3) which co-operates with the control means (16) on the driving wheel (12.2).

15. A locking apparatus (10) according to any one of the preceding claims, **characterized in that** the securing element (15) has a holding means (15.4), by which the locking member (14) is locked, in particular in a positively locking manner, in the unlocking position (Ib).

16. A locking apparatus (10) according to any one of the preceding claims, **characterized in that** the control means (16) of the driving wheel (12.2) is designed in the form of a curved control edge (16.1) and co-operates in an axial manner with the securing element (15), wherein the curved control edge (16.1) is arranged in particular on an opposite side of the guide means (17) from the driving wheel (12.2).

17. A locking apparatus (10) according to any one of claims 1 to 15, **characterized in that** the control means (16) of the driving wheel (12.2) is designed in the form of a plate-shaped control edge (16.2) and co-operates in a radial manner with the securing element (15), wherein the plate-shaped control edge (16.2) is arranged in particular on an opposite side of the guide means (17) from the driving wheel (12.2).

18. A locking apparatus (10) according to any one of the preceding claims, **characterized in that** the driving wheel (12.2) is designed in at least two parts, with a base body (12.5), in which the guide means (16) is arranged, and a toothed body (12.6) which in addition to the set of teeth also has the control means (16), wherein the base body (12.5) is connected in a rotationally fixed manner the toothed body (12.6).

## Revendications

1. Dispositif de verrouillage (10) permettant de verrouiller et/ou de déverrouiller un élément fonctionnellement essentiel (60) d'un véhicule, en particulier une colonne de direction ou un levier de changement de vitesses ou analogue, avec un boîtier (11), un entraînement (12) et un mécanisme de transmission (13) monté à la suite de l'entraînement (12),
ainsi qu'un élément de blocage (14) qui, au moyen du mécanisme de transmission (13), peut adopter au moins deux positions, à savoir
une position de verrouillage (la), dans laquelle l'élément de blocage (14) dépasse hors du boîtier (11) par une ouverture (11.2) et est en relation active avec l'élément (60),
et une position de déverrouillage (Ib), dans laquelle l'élément de blocage (14) n'est pas en relation active avec l'élément,
et qu'un élément de sécurité (15) par lequel l'élément de blocage (14) peut être au moins arrêté dans la position de déverrouillage (Ib), en particulier par engagement positif,
le mécanisme de transmission (13) présentant au moins une roue menante (12.2) actionnant l'élément de blocage (14),
sachant que l'élément de sécurité (15) peut être commandé par la roue menante (12.2) du mécanisme de transmission (13),
et sachant qu'au moins un moyen de commande (16) permettant d'actionner l'élément de sécurité (15) est disposé sur la roue menante (12.2),
**caractérisé en ce que** l'élément de sécurité (15) présente un élément de guidage (15.1), par lequel il est monté à coulissement dans le boîtier (11),
et **en ce qu'**un élément de guidage complémentaire (18.2) pour l'élément de guidage (15.1) de l'élément de sécurité (15) est prévu dans le boîtier (11) ou sur un élément porteur (18).

2. Dispositif de verrouillage (10) selon la revendication 1, **caractérisé en ce que** la roue menante (12.2) du mécanisme de transmission (13) coopère mécaniquement directement avec l'élément de blocage (14) et/ou l'élément de sécurité (15).

3. Dispositif de verrouillage (10) selon la revendication 1 ou 2, **caractérisé en ce que** la roue menante (12.2) présente un moyen de guidage (17), en particulier sous la forme d'une rainure de guidage en spirale (17.1), qui permet d'actionner l'élément de blocage (14).

4. Dispositif de verrouillage (10) selon l'une des revendications précédentes, **caractérisé en ce que** l'entraînement (12), le mécanisme de transmission (13), l'élément de blocage (14) et/ou l'élément de sécurité (15) sont disposés sur l'élément porteur (18) dans le boîtier (11) du dispositif de verrouillage (10).

5. Dispositif de verrouillage (10) selon l'une des revendications précédentes, **caractérisé en ce que** la roue menante (12.2) est monté à rotation dans le boîtier (11) ou sur l'élément porteur (18) au moyen d'un axe (18.1).

6. Dispositif de verrouillage (10) selon l'une des revendications précédentes, **caractérisé en ce que** l'élément de blocage (14) et/ou l'élément de sécurité (15) sont maintenus à coulissement longitudinal dans le boîtier (11), sachant notamment que les directions de déplacement respectives (14.5, 15.5) sont disposées essentiellement orthogonalement l'une par rapport à l'autre.

7. Dispositif de verrouillage (10) selon l'une des revendications précédentes, **caractérisé en ce que** l'élément de blocage (14) est réalisé en au moins deux parties, sachant qu'il est prévu une partie de base (14.1) et une partie active (14.2), et que la partie active (14.2) est montée à ressort dans la partie de base (14.1).

8. Dispositif de verrouillage (10) selon la revendication 7, **caractérisé en ce qu'**un moyen de guidage (14.3) complémentaire au moyen de guidage (17) de la roue menante (12.2) est disposé sur la partie de base (14.1) de l'élément de blocage (14), les moyens de guidage coopérant entre eux par engagement positif.

9. Dispositif de verrouillage (10) selon l'une des revendications précédentes, **caractérisé en ce que** le mécanisme de transmission (13) est autobloquant, de sorte qu'une action sur un côté de sortie n'a pas d'influence sur un côté d'entrée du mécanisme de transmission (13), sachant notamment qu'il est prévu un mécanisme de transmission (13) à vis sans fin.

10. Dispositif de verrouillage (10) selon l'une des revendications précédentes, **caractérisé en ce que** l'élément de sécurité (15) est lui-même sollicité en coulissement par un élément de ressort (19),
sachant que l'élément de sécurité (15) peut adopter au moins deux positions, à savoir
une position d'arrêt (IIb), dans laquelle l'élément de blocage (14) est arrêté dans la position de déverrouillage (Ib) par l'élément de sécurité (15),
et une position de déblocage (IIa), dans laquelle l'élément de sécurité (15) ne coopère pas mécaniquement avec l'élément de blocage (14),
et sachant notamment que l'élément de ressort (19) déplace l'élément de sécurité (15) dans la position d'arrêt (IIb).

11. Dispositif de verrouillage (10) selon la revendication 10, **caractérisé en ce que** l'élément de ressort (19) est maintenu d'une part en engagement positif sur ou dans l'élément de sécurité (15), et d'autre part en engagement positif sur ou dans le boîtier (11) ou l'élément porteur (18).

12. Dispositif de verrouillage (10) selon l'une des revendications précédentes, **caractérisé en ce que** l'élément de guidage (15.1) comprend un profilé en U, et l'élément de guidage complémentaire (18.2) est réalisé en forme de T.

13. Dispositif de verrouillage (10) selon l'une des revendications précédentes, **caractérisé en ce que** l'élément de sécurité (15) présente un moyen de crantage (15.2), en particulier sous la forme d'une saillie montée à ressort, de sorte que l'élément de sécurité (15) est maintenu en engagement positif dans le boîtier (11) ou sur l'élément porteur (18), et **en ce qu'**un moyen de crantage complémentaire (18.3) pour le moyen de crantage (15.2) de l'élément de sécurité (15), qui est notamment réalisé sous forme de saillie ou de décrochement, est prévu dans le boîtier (11) ou sur l'élément porteur (18).

14. Dispositif de verrouillage (10) selon l'une des revendications précédentes, **caractérisé en ce que** l'élément de sécurité (15) présente un moyen de commande complémentaire (15.3), qui coopère avec le moyen de commande (16) sur la roue menante (12.2).

15. Dispositif de verrouillage (10) selon l'une des revendications précédentes, **caractérisé en ce que** l'élément de sécurité (15) présente un moyen de retenue (15.4), de sorte que l'élément de blocage (14) est arrêté notamment par engagement positif dans la position de déverrouillage (Ib).

16. Dispositif de verrouillage (10) selon l'une des revendications précédentes, **caractérisé en ce que** le moyen de commande (16) de la roue menante (12.2) est réalisé sous la forme d'une arête de commande cintrée (16.1) et coopère axialement avec l'élément de sécurité (15), sachant que l'arête de commande cintrée (16.1) est notamment disposée sur un côté de la roue menante (12.2) qui est opposé au moyen de guidage (17).

17. Dispositif de verrouillage (10) selon l'une des revendications 1 à 15, **caractérisé en ce que** le moyen de commande (16) de la roue menante (12.2) est réalisé sous la forme d'une arête de commande en forme de disque (16.2) et coopère radialement avec l'élément de sécurité (15), sachant que l'arête de commande en forme de disque (16.2) est notamment disposée sur un côté de la roue menante (12.2) qui est opposé au moyen de guidage (17).

18. Dispositif de verrouillage (10) selon l'une des revendications précédentes, **caractérisé en ce que** la roue menante (12.2) est réalisée en au moins deux parties, avec un corps de base (12.5) dans lequel est disposé le moyen de guidage (17), et un corps de denture (12.6) qui présente, en plus de la denture, également le moyen de commande (16), sachant que le corps de base (12.5) est lié en rotation au corps de denture (12.6).
